(19) Europäisches Patentamt
European Patent Office
Office européen des brevets

(11) **EP 4 476 085 B1**

(12) **EUROPÄISCHE PATENTSCHRIFT**

(45) Veröffentlichungstag und Bekanntmachung des Hinweises auf die Patenterteilung:
**02.07.2025 Patentblatt 2025/27**

(21) Anmeldenummer: **23730391.2**

(22) Anmeldetag: **26.05.2023**

(51) Internationale Patentklassifikation (IPC):
**B60L 15/20** (2006.01)  **G01C 21/34** (2006.01)
**B60W 40/02** (2006.01)  **G01C 21/36** (2006.01)
**B60W 60/00** (2020.01)

(52) Gemeinsame Patentklassifikation (CPC):
**B60L 15/2045; B60W 60/0023; G01C 21/3691;**
B60L 2240/12; B60L 2240/62; B60L 2240/66;
B60L 2240/70; B60L 2260/50; B60W 40/02

(86) Internationale Anmeldenummer:
**PCT/EP2023/064291**

(87) Internationale Veröffentlichungsnummer:
**WO 2023/241901 (21.12.2023 Gazette 2023/51)**

(54) **VERFAHREN ZUR ENERGIEOPTIMIERTEN VORGABE EINER FAHRGESCHWINDIGKEIT**

METHOD FOR THE ENERGY-OPTIMISED SPECIFYING OF A DRIVING SPEED

PROCÉDÉ DE SPÉCIFICATION OPTIMISÉE EN ÉNERGIE D'UNE VITESSE DE CONDUITE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **15.06.2022 DE 102022002172**

(43) Veröffentlichungstag der Anmeldung:
**18.12.2024 Patentblatt 2024/51**

(73) Patentinhaber: **Mercedes-Benz Group AG 70372 Stuttgart (DE)**

(72) Erfinder:
• HANUSCHKIN, Alexander
71263 Weil der Stadt (DE)
• ECKE, Gerrit
72379 Hechingen-Sickingen (DE)

(74) Vertreter: **Novagraaf Group Chemin de l'Echo 3 1213 Onex / Geneva (CH)**

(56) Entgegenhaltungen:
DE-A1- 102017 218 218    DE-A1- 102018 221 264
DE-A1- 102019 004 883

**EP 4 476 085 B1**

**Beschreibung**

Die Erfindung betrifft ein Verfahren zur energieoptimierten Vorgabe einer aktuellen Fahrzeuggeschwindigkeit bei einer ausgewählten gewünschten Durchschnittsgeschwindigkeit unter Berücksichtigung einer Windverteilung entlang der Fahrroute.

Statische oder adaptierende Geschwindigkeitsregelanlagen (GRA; engl. cruise control) sind aus dem allgemeinen Stand der Technik seit langem bekannt. Sie werden seit den 50er Jahres des letzten Jahrhunderts in den USA und seit dem frühen 1960er Jahren auch in Europa eingesetzt. Hierbei wird mit Hilfe der Geschwindigkeitsregelanlage eine vorgegebene Geschwindigkeit konstant gehalten (statisch) und/oder automatisch bei adaptiven Geschwindigkeitsregelanlage (Adaptive Cruise Control (ACC)) an die Verkehrssituation (vorrausfahrendes Fahrzeug/Geschwindigkeitsbegrenzung) angepasst.

Im Allgemeinen wird angenommen, dass aus physikalischen Gründen bei gleicher Durchschnittsgeschwindigkeit der Kraftstoffverbrauch bei einer Fahrt mit einer Geschwindigkeitsregelanlage gegenüber einer Fahrt ohne dessen Einsatz niedriger ist, da selbst bei geübten Fahrern bei manueller Fahrweise die Geschwindigkeit um die Durchschnittsgeschwindigkeit herum schwankt. Der Energieverbrauch zur Überwindung des Luftwiderstandes ist proportional zum Quadrat der Geschwindigkeit. Die Fahrstreckenanteile mit Geschwindigkeiten über der Durchschnittsgeschwindigkeit führen somit zu mehr Kraftstoffverbrauch als in den Fahrstreckenanteilen mit unterdurchschnittlicher Geschwindigkeit gespart wird. Dies gilt jedoch nur, falls keine zusätzliche Kraft, wie insbesondere durch Wind, auf das Fahrzeug einwirkt.

Neuartige theoretische Ansätze wie z.B. in Jia et al. 2019, Energy-Optimal Adaptive Cruise Control for Electric Vehicles in Both Time and Space Domain based on Model Predictive Control, IFAC-PapersOnLine, Volume 52, Issue 5, 2019, Pages 13-20, existieren und optimieren die momentane adaptive Geschwindigkeitsregelung entsprechend der momentanen Verkehrssituation, im Besonderen in Abhängigkeit des Abstandes zu vorrausfahrenden Fahrzeugen unter Berücksichtigung beispielsweise der antriebsspezifischen Besonderheiten von Batterieelektrischen Fahrzeugen.

Die Änderung der benötigten Kraft in Abhängigkeit eines auf das Fahrzeug einwirkenden Windes wird in beispielsweise in Göhring E., Krämer W. (1985-1986) Auswirkung aerodynamischer Maßnahmen auf Kraftstoffverbrauch und Fahrleistung moderner Nutzfahrzeuge - Teil 1-3. ATZ Automobiltechnische Zeitschrift, beschrieben.

Die Veröffentlichung US 2019/0283602 A1 beschreibt ein Verfahren zur energieoptimierten Fahrgeschwindigkeitsregelung. Dabei werden entsprechend einer gewünschten Durchschnittsgeschwindigkeit auf der Basis grundlegender physikalischer Gesetzmäßigkeiten, wie z.B. der Rollreibung und empirischer Fahrzeugcharakteristik eine optimale Zielgeschwindigkeit für jedes zukünftige Streckensegment ermittelt.

Dabei werden in der Veröffentlichung US 2019/0283602 A1 auch Wetterdaten berücksichtigt, darunter der Wind. Die optimierte Planung der Fahrzeuggeschwindigkeit erfolgt dabei auf der Basis von Windprognosen auf zukünftigen Streckenabschnitten. Genaue Windprognosen sind jedoch extrem schwierig zu erstellen. Für die Windverteilung entlang einer Straße spielt nämlich nicht nur die generelle Windrichtung eine Rolle, sondern auch die Bebauung, die Lage von landschaftlichen Erhebungen, Tälern, Vegetationsflächen und dergleichen. Windprognosen sind daher meist mit hohen Fehlern behaftet, insbesondere in landschaftlich abwechslungsreichen Regionen.

Aus der DE 10 2019 004 883 A1 ist eine Vorrichtung zur Regelung einer Fahrgeschwindigkeit bekannt. Dabei ist es so, dass die Windgeschwindigkeit, die an oder vor einem Fahrzeug vorliegt, erfasst wird, um so je nachdem, ob "Gegenwind" oder "Rückenwind" vorliegt, die Geschwindigkeit entsprechend anpassen zu können. Im Zuge einer Erweiterung der Vorrichtung ist es ferner beschrieben, dass die eigenen Messungen mit externen Messungen kombiniert werden können, welche beispielsweise von einer Fahrzeugflotte erfasst und an einen zentralen Server übertragen werden.

Zum weiteren Stand der Technik kann außerdem auf die DE 10 2018 221 264 A1 verwiesen werden. Hierin wird beschrieben, wie unter Verzicht auf einen Windsensor die Windgeschwindigkeit aus einer Veränderung der Fahrdaten, insbesondere der erfassten Antriebsleistung und Fahrrichtung, hergeleitet werden kann.

Die DE 10 2015 000 394 A1 beschreibt eine fahrzeugflotten-basierte Messung von Umgebungsdaten, welche an eine Servervorrichtung übermittelt werden. Dabei werden Messungenauigkeiten, wie sie beispielsweise durch ein Rauschen verursacht werden, über Wahrscheinlichkeitswerte oder einen Wahrscheinlichkeitsdichtewert kompensiert.

Ferner ist es aus der DE 10 2017 218 218 A1 ein Verfahren zur Ermittlung einer effektiven Windgeschwindigkeit bekannt, welcher ein Fahrzeug während einer Fahrt ausgesetzt ist. Dabei wird eine Summe aus allen auf das Fahrzeug wirkenden Kräfte genutzt, von welchen alle bis auf die Windkraft bekannt oder abschätzbar sind, um auf die Windkraft zu schließen.

Die Aufgabe der hier vorliegenden Erfindung besteht darin ein verbessertes Verfahren gemäß dem Oberbegriff des Anspruchs 1 anzugeben, welches insbesondere keine derartigen Windprognosen benötigt.

Erfindungsgemäß wird diese Aufgabe durch ein Verfahren mit den Merkmalen im Anspruch 1, und hier insbesondere im kennzeichnenden Teil des Anspruchs 1, gelöst. Vorteilhafte Ausgestaltungen und Weiterbildungen des Verfahrens ergeben sich aus den hiervon abhängigen Unteransprüchen.

Bei dem Verfahren ist es so, dass anstelle der häufig fehlerbehafteten und sehr komplex zu erstellenden Windprognose die statistische Windverteilung auf der Basis von örtlichen Windwerten erstellt wird, die auf Messwerten basieren, welche durch eine Vielzahl von Fahrzeugen einer Fahrzeugflotte mit geeigneten Windsensoren erfasst und mit einem fahrzeugexternen Server geteilt werden. Dieser aggregiert die einzelnen Messwerte und stellt die so erstellten Windwerte für mehrere aufeinanderfolgende Positionen entlang einer geplanten Fahrtroute oder ihrer örtlichen Region zur Verfügung.

Das Verfahren nutzt also aus, dass eine Vielzahl von Fahrzeugen einer Fahrzeugflotte in einer Kommunikationsverbindung mit dem fahrzeugexternen Server stehen und die Daten von Windsensoren mit diesem fahrzeugexternen Server teilen. Hierdurch lässt sich eine aktuelle Datenbasis über die Windverhältnisse als Tabelle, Kennfeld oder bevorzugt als eine Windkarte, insbesondere zur Erfassung von Seitenwindsituationen, erstellen. Dies ermöglicht es, weitaus besser und zuverlässiger als mit auf Wettermodellen basierenden Prognosen, die Windverteilung aus diesen Windwerten entlang der geplanten Fahrtroute zu berechnen bzw. abzuleitet und also sloche bereitzustellen. Dies erlaubt es die Windverhältnisse zu nutzen und die Fahrzeuggeschwindigkeit mittels einer Geschwindigkeitsregelanlage so einzustellen, dass eine gewünschte und vorgegebene Durchschnittsgeschwindigkeit energieoptimiert erreicht werden kann.

Aus einer Vielzahl von erfassten Werten für jeden Ort, welche aus der entsprechenden Vielzahl von Fahrzeugen der Flotte mit den Windsensoren herrühren, lässt sich dann gemäß des erfindungsgemäßen Verfahrens für jeden verfügbaren Ort, also für jeden Ort, für den die entsprechenden Windwerte bzw. Messwerte vorliegen, eine ortsabhängige Windwahrscheinlichkeitsdichtefunktion in Abhängigkeit des Windbetrags und des Windwinkels erstellen. Diese lässt sich nun für die energieoptimierte Geschwindigkeitsregelung nutzen.

Dabei wird anhand der geplanten Route mittels der ortsabhängigen Windwahrscheinlichkeitsdichtefunktionen eine Wahrscheinlichkeitsdichtefunktion des Windes, und hier insbesondere des Seitenwindes, entlang der Route berechnet. Damit liegen die statistisch zu erwartende Windwerte entlang der gesamten Route vor. Ändert sich die Windsituation deutlich, was durch die weiterhin übertragenen Windwerte bzw. Messwerte der einzelnen Fahrzeuge der Flotte erfasst werden kann, dann lässt sich diese Windwahrscheinlichkeitsdichtefunktion entlang der Fahrtroute bei Bedarf auch aktualisieren bzw. nachjustieren.

Zur energieoptimierten Vorgabe einer Fahrzeuggeschwindigkeit wird auf der Basis der Windwahrscheinlichkeitsdichte entlang der Fahrtroute mittels eines Optimierungsverfahrens eine Schwellwertfunktion definiert, die die von den Beträgen der Windgeschwindigkeit und dem Windwinkel aufgespannte Fläche in der Art in zwei Bereiche aufteilt, dass in dem einen Bereich die Fahrzeuggeschwindigkeit erhöht werden kann ohne mehr Nettokraft aufbringen zu müssen und in dem anderen Bereich die Fahrzeuggeschwindigkeit verringert werden muss, um nicht mehr Nettokraft aufbringen zu müssen. Die Schwellwertfunktion stellt somit also die Bereiche zur Verfügung, bei denen ohne zusätzlichen Kraftaufwand schneller als mit der vorgegebenen Durchschnittsgeschwindigkeit gefahren werden kann, um entsprechend Zeit einzusparen. Im anderen Bereich sind die Windverhältnisse so, dass eine langsamere Fahrweise notwendig ist, um nicht mehr Kraft zu benötigen als gewünscht. Anhand der Fahrtroute und der gewünschten Durchschnittsgeschwindigkeit lassen sich diese Bereiche nun so nutzen, dass in bestimmten Bereichen entsprechend schneller gefahren wird, um in den anderen Bereichen entsprechend langsamer zu fahren, und so über die Fahrtroute Energie einzusparen.

Dabei wird vom Fahrzeug ein aktueller Messwert erfasst, um den aktuellen Windwert zu bestimmen, wonach dessen Lage in dem einen oder andere Bereich, oder im Grenzfall auch auf der Schwellwertfunktion selbst, bestimmt wird. Bei einer Lage in dem einen Bereich wird die Geschwindigkeit entsprechend vergrößert entweder dynamisch oder um einen fest vorgegebenen Geschwindigkeitsbetrag, im anderen Bereich wird sie entsprechend verringert. Damit lässt sich eine außerordentlich einfache und effiziente Steuerung realisieren, insbesondere wenn die Windwahrscheinlichkeitsdichte entlang der Fahrtroute sowie die Schwellwertfunktion vorab, beispielsweise durch den fahrzeugexternen Server, bestimmt werden. Mit minimalen Rechenaufwand und einer optimierten Nutzung der vorhandenen Ressourcen lässt sich so während der Fahrt einfach durch einen Vergleich des aktuell erfassten Messwertes mit der Schwellwertfunktion eine energieoptimierte Geschwindigkeitsanpassung vornehmen. Liegt der erfasste Messwert dabei direkt auf der Schwellwertfunktion kann die Geschwindigkeit entsprechend konstant gehalten werden, um dies hier noch zu ergänzen.

Die Messwerte umfassen dabei gemäß einer sehr vorteilhaften Weiterbildung der Idee den Windgeschwindigkeitsbetrag, also den Betrag der Windstärke, sowie die Windrichtung. Eine sehr günstige Ausgestaltung kann es dann vorsehen, dass die Windwerte durch eine zeitliche und/oder örtliche Mittelung der Messwerte gebildet werden.

Gemäß einer weiteren sehr günstigen Ausgestaltung kann es dabei vorgesehen sein, dass eine Gewichtung der Messwerte entsprechend der Zeitspanne zwischen der Verwendung der Messwerte und ihrer Messung erfolgt. Somit lassen sich beispielsweise weiter zurückliegende Messwerte im Falle einer zeitlichen und/oder örtlichen Mittelung weniger stark beim Mittelwert berücksichtigen, als entsprechend aktuelle Messwerte. Insbesondere kann die Gewichtung ab einer gewissen Zeitspanne seit der Messung auch mit einem Gewichtungsfaktor von Null angesetzt werden, sodass ältere Messwerte nach Ablauf einer vorgegebenen "Gültigkeitszeitspanne" nicht weiter berücksichtigt werden.

Daneben können weitere vor Ort erhobene Informationen bei der Aggregation verwendet werden. So kann beispielsweise die Verkehrslage Berücksichtigung finden. Hierfür können beispielsweise die Anzahl der Fahrzeuge auf der Fahrspur bzw. der Gegenspur, die Geschwindigkeit der Fahrzeuge sowie die Art und Anzahl geparkter Fahrzeuge am Fahrzeugrand oder auch andere Gegebenheiten, welche die Windverhältnisse beeinflussen könnten, genutzt werden. Werden diese Daten während der Windmessung erhoben und entsprechend berücksichtigt, so kann beispielsweise die Streuung von Messwerten reduziert werden, indem beispielsweise Messwerte im Falle von nahe vorbeifahrenden Fahrzeugen während der Messung weniger stark gewichtet oder gegebenenfalls vollständig verworfen werden.

Wie bereits oben erwähnt kann gemäß einer sehr vorteilhaften Weiterbildung des erfindungsgemäßen Verfahrens eine Aktualisierung der Windwahrscheinlichkeitsdichte bei sich ändernden Messwerten aus der Flotte der Fahrzeuge vorgesehen werden.

Eine weitere sehr günstige Ausgestaltung berücksichtigt ergänzend den Widerstandsbeiwert bzw. $c_W$-Wert des entsprechenden Fahrzeugs, welcher ebenfalls windabhängig, insbesondere in Abhängigkeit des Windwinkels ist. Ein eventuell auftretender Seitenwind kann so berücksichtigt werden und in die Optimierung zur Ermittlung der Schwellwertfunktion einfließen.

Weitere vorteilhafte Ausgestaltungen des erfindungsgemäßen Verfahrens ergeben sich außerdem aus dem Ausführungsbeispiel, welches nachfolgend unter Bezugnahme auf die Figuren im Detail erläutert wird.

Dabei zeigen:

Fig. 1     eine Übersicht zur Erläuterung des Verfahrens;

Fig. 2     ein Beispiel zur Erläuterung der orts- und zeitaufgelösten Aggregation von Messwerten aus einer Fahrzeugflotte;

Fig. 3     eine erfindungsgemäßen Windwahrscheinlichkeitsdichte basierend auf den entsprechenden Daten;

Fig. 4     das Erstellen einer Windwahrscheinlichkeitsdichte entlang einer geplanten Fahrtoute;

Fig. 5     Bereitstellen der gemäß Figur 4 erstellten Windwahrscheinlichkeitsdichte entlang einer geplanten Fahrtoute für ein Fahrzeug;

Fig. 6     das Erstellen einer globaloptimierten Schwellwertfunktion;

Fig. 7     ein Diagramm und ein Schema zur Erläuterung des Zusammenhangs zwischen der Luftreibungskraft und dem Windwinkel;

Fig. 8     eine analoge Darstellung zur Figur 7 zur Erläuterung des Zusammenhangs zwischen der Differenz der Luftreibungskraft bei geänderter Geschwindigkeit in Abhängigkeit des Windwinkels;

Fig. 9     ein Diagramm zur schematischen Erläuterung der Zusammenhänge zur Optimierung zum Erreichen der Schwellwertfunktion;

Fig. 10    eine Schwellwertfunktion innerhalb der Windwahrscheinlichkeitsdichte mit den beiden Bereichen;

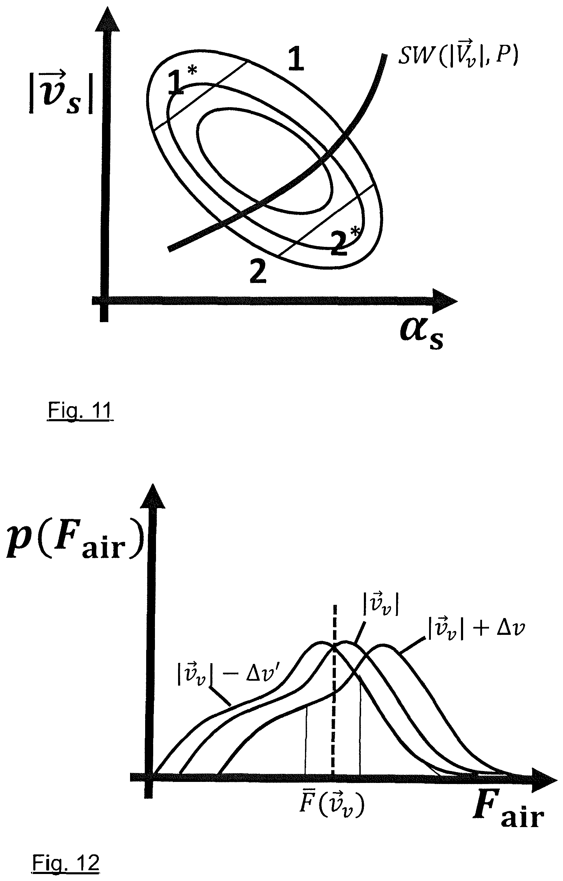

Fig. 11    eine Darstellung analog zur der in Fig. 10 mit zwei Teilbereichen der jeweiligen Bereiche;

Fig. 12    eine Darstellung des Sachverhalts aus Fig. 11 in einem Wahrscheinlichkeit/Kraft-Diagramm; und

Fig. 13    ein Ablaufdiagramm zur Erläuterung eines möglichen Ablaufs des erfindungsgemäßen Verfahrens.

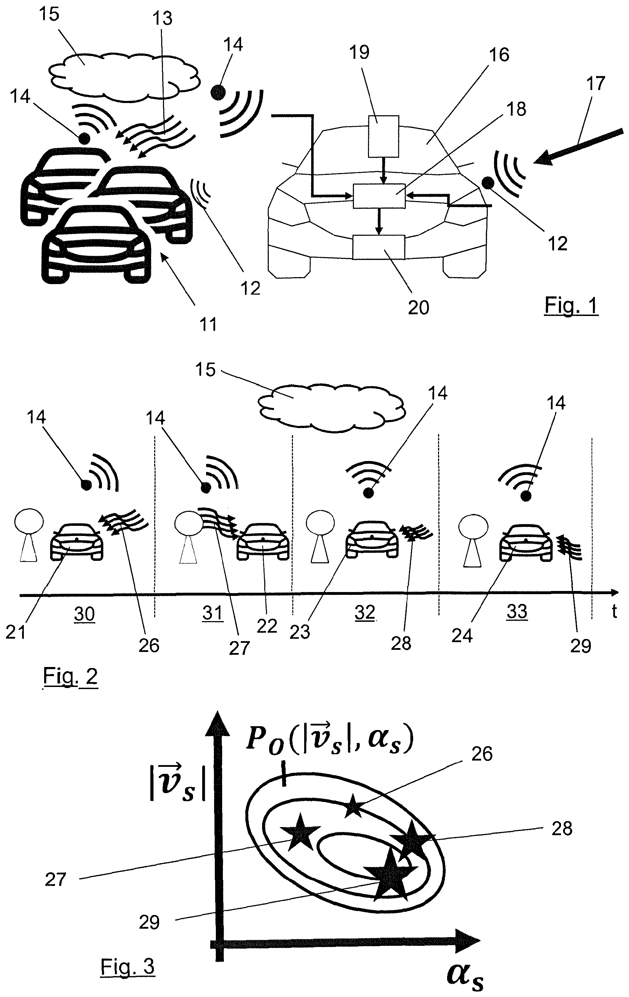

Figur 1 zeigt eine Fahrzeugflotte 11 von Fahrzeugen, welche über (Seiten-)windsensoren 12 auf Fahrzeugen Messwerte erfassen. Diese Messwerte beinhalten die momentanen Windgeschwindigkeitsbeträge und -richtungen. Eine Fahrzeugflotte 11 misst also mit den Windsensoren 12 orts- und zeitaufgelöst die Windverhältnisse 13. Sie sendet diese Information mittels Datenkommunikationseinheit 14 an einen fahrzeugexternen Server, z.B. eine Cloud/Rechenzentrum 15. Dort werden diese Informationen aggregiert und es wird eine ort- und zeitgemittelte (Seiten-)Windverteilung erstellt. Die Windwerte lassen sich dabei auf verschiedene Arten Speichern, z.B. in einer Tabelle, einem Kennfeld oder besonders bevorzugt in einer digitalen Windverteilungskarte. Solche Seitenwindverteilungskarte können momentan gemessene Windgeschwindigkeitsbeträge und -richtungen örtlich mitteln und mit einer Wahrscheinlichkeitsverteilung P der Werte weiter kennzeichnen. Hierbei wird ausgenutzt, dass sehr viele Fahrzeuge in der Flotte 11 mit relative kurzen Zeitunterschieden den gleichen Ort befahren und diese hierbei ermittelten Werte über einen Zeitraum gemittelt werden können. Vorteilhafter Weise können frühere Seitenwindverteilungskarten (zeitabhängig) gespeichert und als Startwerte für momentan ermittelte Seitenwindverteilungskarten benutzt werden. Beispielsweise können Seitenwindverteilungskarten jahreszeitlichen Schwankungen unterliegen.

Für jeden Ort O werden dazu, wie es in Figur 2 angedeutet ist, die zu verschiedenen Zeitpunkten 30-33, wobei 33 der derzeitige Zeitpunkt und 30-32 vergangene Zeitpunkte kennzeichnen, von verschiedenen Fahrzeugen 21-24 der Flotte 11 die Windinformationen 26-29 gemessen und mittels der Datenkommunikationseinheit 14 an die Cloud/ das Rechenzentrum 15 weitergeleitet und dort diese orts- und zeitaufgelösten Windinformationen aggregiert werden. Vorteilhafter Weise werden die Informationen derart aggregiert, dass für jeden Ort O eine In Figur 3 dargestellte ortsabhängige Windwahrscheinlichkeitsdichtefunktion

$$P_O\left(|\vec{v}_s|, \alpha_s\right)$$

des Windbetrags ($|v_s|$) und der Windrichtung bzw. des Windwinkels ($\alpha_s$) erstellt wird. Hierzu werden die Windinformationen 26-29 entsprechend ihrer zeitlichen Komponente gewichtet verarbeitet, beispielsweise werden ältere Informationen weniger stark gewichtet als neuere Informationen. Dies ist in der Figur 3 angedeutet durch die unterschiedliche Größe der Sterne, welche die Windinformationen 20-23 in der Windwahrscheinlichkeitsdichte $P_O$ der Figur 3 symbolisieren. Die einzelnen von den Ringen bzw. Ovalen umgebenen Flächen stehen dabei für verschiedene Wertebereiche der Wahrscheinlichkeitsdichte.

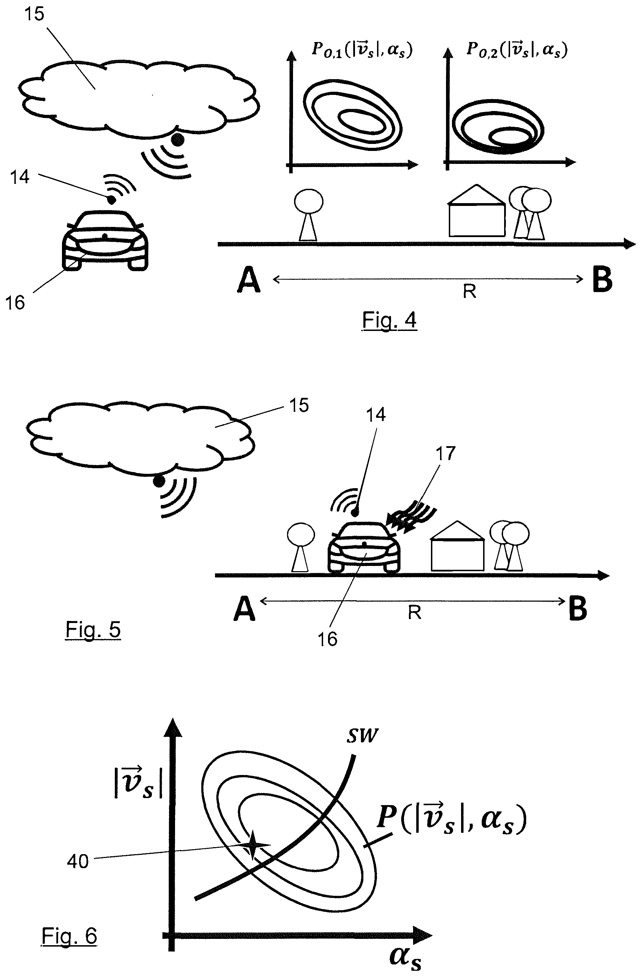

Die aggregierten Informationen können dann an Fahrzeuge in der Flotte 11 übermittelt werden. In Figur 1 werden die aggregierten orts- und zeitaufgelösten Windinformationen zum Beispiel via Datenkommunikationseinheit 14 an ein Fahrzeug 16 übermittelt. Beginnt nun das Fahrzeug 16 eine Fahrt, so wird mit Hilfe eines Navigationssystems 19 eine Fahrtroute R vom Startort A zum Zielort B berechnet und mit den Informationen der Seitenwindverteilungskarte zu einer Wahrscheinlichkeitsverteilung P der Seitenwindverhältnisse auf der Fahrtroute R kombiniert, wie es in Figur 4 angedeutet ist.

Für eine geplante Fahrtroute R von A nach B des Fahrzeuges 16 werden zu jedem Ort $O_i$ auf der Route Informationen der ortsaufgelösten Windwahrscheinlichkeitsdichtefunktionen $P_{0,i}(|\vec{v}_s|, \alpha_s)$ ermittelt und zu einer Windwahrscheinlichkeitsverteilung P der Gesamtroute zusammengefügt, wie es in Figur 5 schematisch zu erkennen ist.

Die Informationen können entweder lokal im Fahrzeug 16 oder im Rechenzentrum 5 verarbeitet werden, im ersten Fall müssen die ortsaufgelösten Windwahrscheinlichkeitsdichten an das Fahrzeug 16 gesandt werden, im letzteren Fall muss die Routeninformation an das Rechenzentrum gesandt werden.

Für die geplante Route A nach B des Fahrzeuges 16 werden auf Basis der Windwahrscheinlichkeitsverteilung P der Gesamtroute sowie ggf. weiterer Vorgaben, auf welche nachfolgend noch näher eingegangen wird, mittels Optimierungsverfahren eine Entscheidungsfunktion bzw. ein Schwellwertfunktion SW definiert, welche den Raum der Windgeschwindigkeiten und -winkel in zwei Bereiche aufteilt, wie es in Figur 6 dargestellt ist.

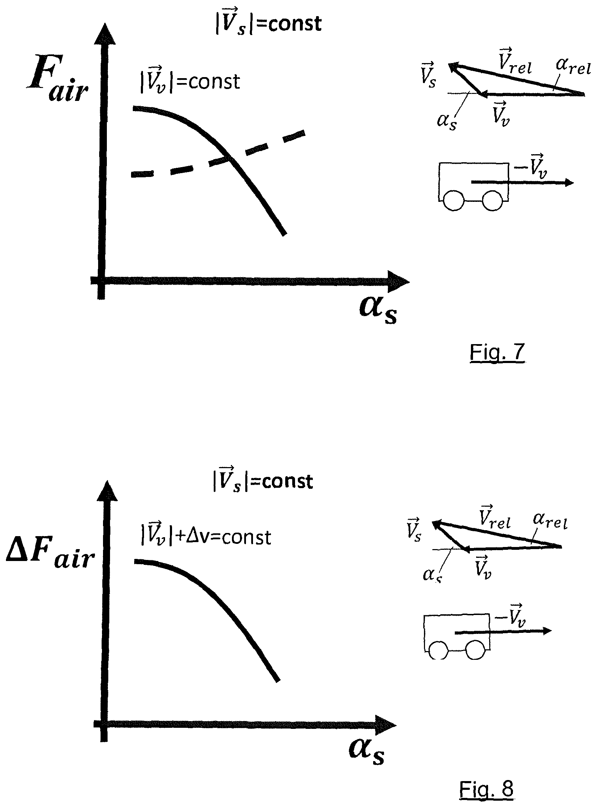

Dem liegen die folgenden anhand der Figuren 7ff erläuterten Überlegungen zugrunde: Die bei einer Fahrt mit einer konstanten Geschwindigkeit $|\mathbf{v}_v|$ (der fettdruck symbolisiert dabei einen Vektor) zu erbringende Luftreibungskraft $F_{air}$ (durchgezogene Kurve) ist bei konstantem Betrag der Windgeschwindigkeit $|\mathbf{v}_v|$ und konstantem (d.h. nicht windwinkelabhängigen angenommenen) Luftwiderstandsbeiwert $c_W$ abhängig vom Windwinkel $\alpha_s$. Mit zunehmenden Windwinkel $\alpha_s$, welcher ein Element der Menge zwischen 0° und 180° ist, wird die Luftreibungskraft $F_{air}$ geringer, da der Betrag $|\mathbf{v}_{rel}|$ der Relativgeschwindigkeit der anströmenden Luft als Vektorsumme von $\mathbf{v}_v$ und $\mathbf{v}_s$ nach der Formel:

$$|\vec{V}_{rel}|^2 = |\vec{V}_v|^2 + |\vec{V}_s|^2 + 2|\vec{V}_v||\vec{V}_v|\cos(\alpha_s)$$

geringer wird.

In den trivialen Fäll von $\alpha_s = 0°$ (maximaler Gegenwind) bzw. $\alpha_s = 180°$. (maximaler Rückenwind) ist der Betrag $|\mathbf{v}_{rel}|$ maximal bzw. minimal. Im Allgemeinen nimmt der Luftwiderstandsbeiwert $c_W$ mit zunehmendem relativen Winkel der anströmenden Luft $\alpha_{rel}$ und bei konstanten Geschwindigkeiten mit zunehmendem Windwinkel $\alpha_s$ (beispielsweise quadratisch) zu und die Luftreibungskraft $F_{air}$ steigt für größere Windwinkel $\alpha_s$ an, wie es durch die gestrichelte Kurve in Figur 7 dargestellt ist.

Die in Figur 8 dargestellte Differenz der bei einer Fahrt mit einer konstanten Geschwindigkeit $|\mathbf{v}_v|+\Delta v$ und bei einer konstanten Geschwindigkeit $|\mathbf{v}_v|$ zu erbringende Luftreibungskraft $\Delta F_{air}$ ist bei konstantem Betrag der Windgeschwindigkeit $|\mathbf{v}_s|$ abhängig vom Windwinkel $\alpha_s$. Mit zunehmenden Windwinkel $\alpha_s$, welcher ein Element der Menge zwischen 0° und 180° ist, wird weniger zusätzliche Luftreibungskraft $\Delta F_{air}$ benötigt, da der Betrag $|\mathbf{v}_{rel}|$ der Relativgeschwindigkeit der anströmenden Luft als Vektorsumme von $\mathbf{v}_v$ und $\mathbf{v}_s$ nach der oben genannten Formel geringer wird und quadratisch in die Kraft eingeht während der Wert des im Allgemeinen windwinkelabhängigen Luftwiderstandsbeiwert $c_W$ für jedes $\alpha_s$ konstant angenommen oder approximiert wird.

Die bei einer Fahrt mit einer konstanten Geschwindigkeit $|\mathbf{v}_v|$ zu erbringende Luftreibungskraft $F_{air}$ sowie die zusätzliche Kraft $\Delta F_{air}$, um eine Geschwindigkeit $\Delta v$ schneller zu fahren ist bei konstantem Betrag der Windgeschwindigkeit $|\mathbf{v}_s|$ abhängig vom Windwinkel $\alpha_s$, wie es die Figuren 7 und 8 zeigen. Mit zunehmenden Windwinkel $\alpha_s$ wird die zusätzlich benötigte Luftreibungskraft $\Delta F_{air}$ geringer (vergl. Figur 8). Wird nun die Fahrzeuggeschwindigkeit um $\Delta v$ erhöht bzw. um $\Delta v'$ verringert, so ergeben sich die Luftreibungskraft

$F_{air}(|V_v| + \Delta v)$ bzw. $F_{air}(|\vec{V}_v|\_ \Delta v')$
und entsprechend $|\Delta F_{air}|$ zu $|F_{air}(|\vec{V}_v|) - F_{air}(|\vec{V}_v| + \Delta v)|$
bzw. zu $F_{air}(|\vec{V}_v|) - F_{air}(|\vec{V}_v| - \Delta v')$.

Ab einem Schwellwertwinkel $\alpha_{s,th}$, welcher im Allgemeinen vom Betrag der Fahrzeuggeschwindigkeit, dem Windgeschwindigkeitsvektor $\vec{V}_s$, d.h. $|\vec{V}_s|$ und $\alpha_s$

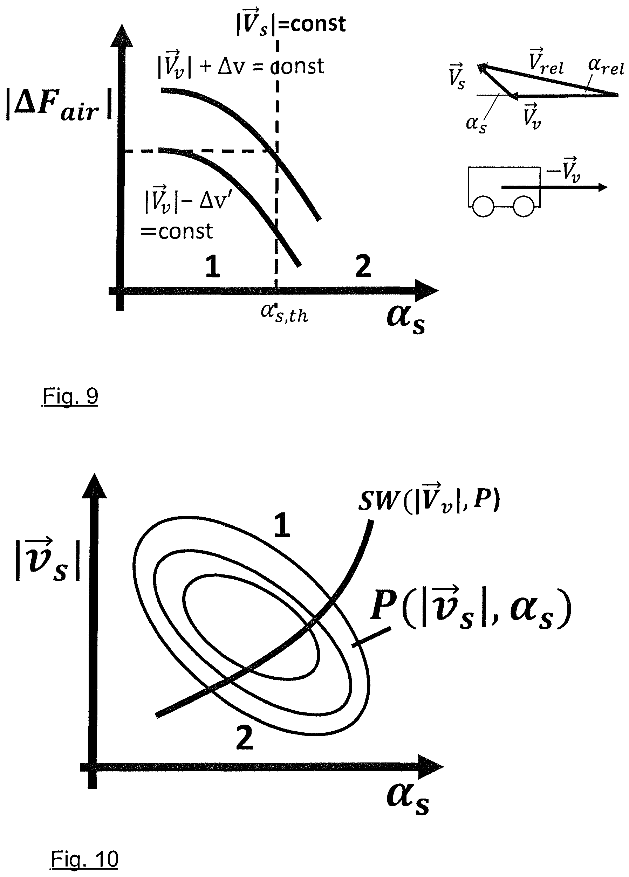

sowie $\Delta v'$ und $\Delta v$ abhängig ist (in Figur 9 konstant), wird bei einer um $\Delta v$ höheren Geschwindigkeit weniger zusätzliche aufzubringende Luftreibungskraft benötigt, als bei einem um $\Delta v'$ niedrigeren Geschwindigkeit bei einem kleineren Winkel eingespart werden kann. D.h. fährt man bei kleinen Windwinkeln langsamer, so kann man bei größeren Windwinkeln schneller fahren ohne mehr Kraft aufzubringen, sofern der Betrag $|v_s|$ der Windgeschwindigkeit zumindest im Mittel konstant bleibt. Somit ergeben sich zwei Bereiche (1, 2) in welchen, die Geschwindigkeit reduziert (1) bzw. erhöht (2) werden kann ohne mehr Nettokraft aufbringen zu müssen.

Wird

$$|\vec{V_v}| - \Delta v' = 1/(2/|\vec{V_v}| - 1/(|\vec{V_v}| + \Delta v))$$

gewählt, so ist die Durchschnittsgeschwindigkeit gerade $|v_v|$ gerade, wenn die gleichen Teilstreckenlängen jeweils mit

$$|\vec{V_v}| + \Delta v \text{ bzw. } |\vec{V_v}| - \Delta v'$$

und ggf. eine verbleibende Reststrecke mit $|v_v|$ gefahren wird.

Im Allgemeinen existiert also, wie in Figur 10 gezeigt, für eine Wahrscheinlichkeitsdichtefunktion $P(|v_s|, \alpha_s)$, eine Schwellwertfunktion SW, welche abhängig von der Fahrzeuggeschwindigkeit $|v_v|$ sowie dem momentanen Windver-hältnissen ($|v_s|$ und $\alpha_s$) den Bereich aller möglichen/wahrscheinlichen Windverhältnisse (also die Bereiche 1 und 2 zusammen) in zwei Bereiche 1 und 2 aufteilt, wobei in Bereich 1 die Fahrzeuggeschwindigkeit reduziert und in Bereich 2 die Fahrzeuggeschwindigkeit erhöht werden kann ohne mehr Nettokraft aufbringen zu müssen. Solange die gesamten gefahrenen Streckenabschnitte in Bereich 1 und Bereich 2 gleich groß sind, ist die Durchschnittsgeschwindigkeit dann gerade $|v_v|$, wie es in Figur 9 erkennbar ist. Die Schwellwertfunktion SW ist vorteilhafter Weise bestimmt durch die der Kraft F, welche als mittlere Kraft gegeben die Windwahrscheinlichkeitsverteilung P aufgebracht werden muss.

Für die, aus der Fahrzeugflotte gewonnene und im Rechenzentrum aggregierte, orts-und zeitabhängige und mit der Routeninformation des Fahrzeuges berechnete, Wahrscheinlichkeitsdichtefunktion $P(|v_s|, \alpha_s)$ lässt sich somit zu jedem vom Fahrzeug gemessenen momentanen Windverhältnis bestimmen, ob es sich in Bereich 1 oder 2 befindet, sowie die Wahrscheinlichkeit, dass dieses Windverhältnis auf der Route auftreten wird (die Flächen in den Ringen bzw. Ovalen symbolisieren verschiedene Wertebereiche der Wahrscheinlichkeitsdichte).

Integriert man das Produkt aus der Wahrscheinlichkeitsdichtefunktion P, dass zu einem Wertepaar $|v_s|$ und $\alpha_s$ ein Wind auftritt, mit der Luftreibungskraft gegeben $|v_s|$, $\alpha_s$ und $|v_v|$, so erhält man die gesamte mittlere benötigte Kraft, d.h. die Kraft die im Mittel auf der Route mit diesen Windverhältnissen benötigt wird.

Hierbei ist selbstverständlich die Wahrscheinlichkeitsdichte normiert, d.h. das Integral der Wahrscheinlichkeitsdichte über den gesamten Raum ist:

$$\int_{1+2} P \, d|\vec{v}_s| d\alpha_s = 1$$

Integriert man das Produkt aus der Wahrscheinlichkeitsdichtefunktion P mit der Luftreibungskraft gegeben $|v_s|$, $\alpha_s$ und einer um $\Delta v$ erhöhten Geschwindigkeit $|v_v| + \Delta v$ in Bereich 2, so erhält man die gesamte mittlere benötigte Kraft $F_{loss}$, um $\Delta v$ schneller zu fahren.

$$F_{loss} = \int_2 P(|\vec{v}_s|, \alpha_s) \cdot F_{air}(|\vec{v}_s|, \alpha_s, \vec{v}_v + \Delta v) \, d|\vec{v}_s| d\alpha_s$$

Integriert man das Produkt aus der Wahrscheinlichkeitsdichtefunktion P mit der Luftreibungskraft gegeben $|v_s|$, $\alpha_s$ und einer um $\Delta v'$ reduzierten Geschwindigkeit $|v_v|$ - $\Delta v'$ in Bereich 1 so erhält man die gesamte mittlere benötigte Kraft $F_{gain}$, wenn $\Delta v'$ langsamer gefahren wird.

$$F_{gain} = \int_1 P(|\vec{v}_s|, \alpha_s) \cdot F_{air}(|\vec{v}_s|, \alpha_s, \vec{v}_v - \Delta v') d|\vec{v}_s| d\alpha_s$$

Zu jedem Zeitpunkt t und dem zu diesem Zeitpunkt geltenden vektoriellen Windwert lässt sich mit dem Wissen über die beschriebenen Kräfte eine zu fahrende Geschwindigkeit $v_v$ der Gestalt wählen, dass die Gesamtenergie über die Route minimiert wird.

Beispielsweise kann in einer einfachen Regelung für jedes Gruppenelement $F_{air}(\vec{v}_s(t), \vec{v}_v)$ berechnet werden, ob der Wert über oder unterhalb von $\overline{F}$ ist. Ist $F_{air}(\vec{v}_s(t), \vec{v}_v + \Delta v) << \overline{F}$ so kann die Geschwindigkeit erhöht werden. Für $F_{air}\ \vec{v}_s(t)$, $\vec{v}_v - \Delta v') >> \overline{F}$ sollte die Geschwindigkeit reduziert werden, wobei das Verhältnis der beiden Fällen berechnet und berücksichtigt werden muss, um eine konstante Geschwindigkeit über die Gesamtstrecke zu realisieren.

Allgemein können zwei Regionen 1* und 2* in P, welche Teilmengen der Bereiche 1 bzw. 2 sind, unter der Bedingung, dass die Gesamtwahrscheinlichkeit beider Teilmengen gleich groß sind bestimmt werden. Dafür bestimmt man die zwei Regionen 1* und 2* in P bzw. der von $|\mathbf{v}_s|$, $\alpha_s$, aufgespannten Fläche unter der Bedingung, dass

$$\int_{1*} P d|\vec{v}_s| d\alpha_s = \int_{2*} P d|\vec{v}_s| d\alpha_s$$

und reduziert die Geschwindigkeit in 1* um $\Delta v'$ und erhöht diese in 2* um $\Delta v$ so ist die Durchschnittsgeschwindigkeit $|\mathbf{v}_v|$. Des Weiteren ergeben die beiden Regionen den gesamten Kraftgewinn aus der Differenz zwischen $F_{gain}$ und $F_{loss}$, mit

$$F_{gain} = \int_{1*} P \cdot F_{air}(\vec{v}_v - \Delta v') d|\vec{v}_s| d\alpha_s$$

und

$$F_{loss} = \int_{2*} P \cdot F_{air}(\vec{v}_v + \Delta v) d|\vec{v}_s| d\alpha_s.$$

Die optimalen Bereiche/Regionen 1* und 2* können durch Standardverfahren der Optimierung gefunden werden:

$$\text{argmax}_{1*,2*} (F_{gain} - F_{loss}) \text{ mit } \int_{1*} P d|\vec{v}_s| d\alpha_s = \int_{2*} P d|\vec{v}_s| d\alpha_s.$$

Somit ergibt sich die momentane Reglung im Fahrzeug aus den optimalen Regionen sowie des derzeitigen Windzustandes, d.h. ob man sich in Region 1*, 2* oder außerhalb davon befindet, wird durch den die momentanen Windverhältnisse gegeben.

Des Weiteren ist im Allgemeinen der fahrzeugspezifische Luftwiderstandsbeiwert $c_W$ (engl. drag coefficient) abhängig von dem relativen Winkel der anströmenden Luft $\alpha_{rel}$, welche wiederrum durch Winkel des auftretenden Seitenwindes $\alpha_s$ sowie $\mathbf{v}_v$ und $\mathbf{v}_s$ gegeben ist und kann bei der Optimierung berücksichtigt werden. Im Speziellen kann der fahrzeugspezifische Luftwiderstandsbeiwert $c_w$ mit Zunahme von $\alpha_{rel}$ zunehmen (und somit durch eine Geschwindigkeitserhöhung reduziert werden). Details hierzu sind allgemein bekannt und finden sich u.a. im eingangs genannten Stand der Technik z.B. von Göhring und Krämer (1985 und 1986).

In einer weiteren Ausführungsform kann die Durchschnittsgeschwindigkeit auf verschiedenen Streckenabschnitten i, automatisch z.B. auf Basis von streckenabhängigen Geschwindigkeitsbeschränkungen und/oder manuell durch Wahl des Fahrers verändert werden. Jeder Streckenabschnitt i wird dann wie eine eigene Route betrachtet und die optimale Regelstrategie der adaptiven Geschwindigkeitsregelanlagen GRA für jeden Streckenabschnitt i berechnet.

Während der Fahrt, misst das Fahrzeug 16 die momentane lokale Windrichtung- und -geschwindigkeit (in Figur 1 und Figur 5 mit 17 bezeichnet). Auf Basis des momentan zum Zeitpunkt $t_0$ gemessenen Wertes wird geprüft, ob dieser oberhalb oder unterhalb der Entscheidungsfunktion bzw. der Schwellwertfunktion SW liegt. Liegt der Wert oberhalb der Schwellwertfunktion SW, so kann die Geschwindigkeit um einen festen Wert $\Delta v'$ reduziert werden und somit Energie gespart werden. Die Entscheidungsfunktion bzw. die Schwellwertfunktion SW wurde vor Fahrtbeginn gerade derart optimiert, dass die Geschwindigkeit zu einem anderen Zeitpunkt $t_x$ und andere momentan gemessener Windverhältnisse um einen festen Betrag $\Delta v$ erhöht werden kann, um eine vorgegebene Durchschnittsgeschwindigkeit $|\mathbf{v}_v|$ auf der Route zu erreichen und gleichzeitig weniger Energie für die schnellere Fahrt zum Zeitpunkt $t_x$ zu benötigen als zum Zeitpunkt $t_0$ eingespart wird. Vergl. Figur 6 Bezugszeichen 40.

Des Weiteren ist diese Regelung besonders energieeffizient, da die optimale Schwellwertfunktion SW nur einmal berechnet werden muss und zu jedem Zeitpunkt der gemessene Windwert in Relation zur Schwellwertfunktion SW ausseichend ist, um zu entscheiden, ob das Fahrzeug mit einer höheren als, langsameren als oder der Durchschnittsgeschwindigkeit fahren soll.

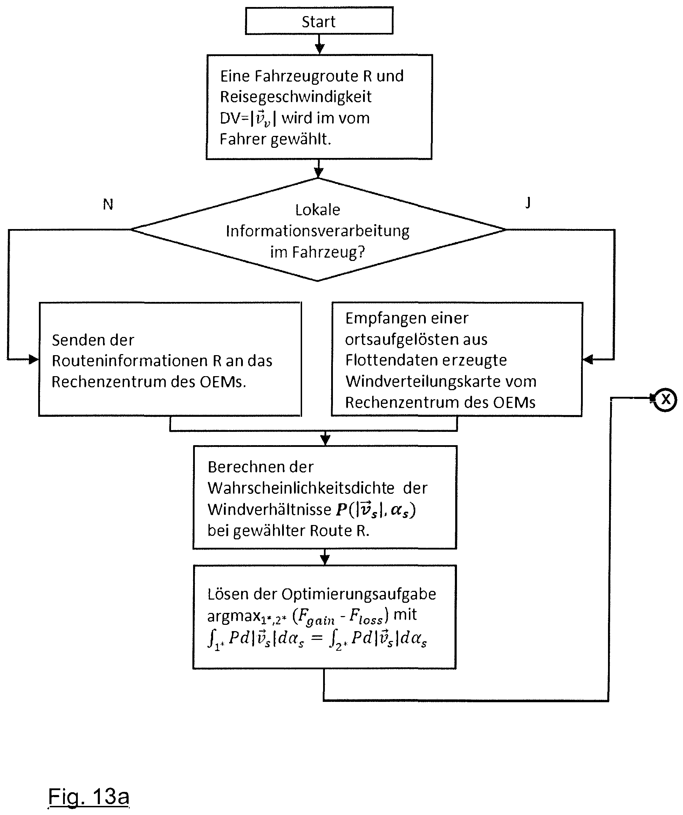

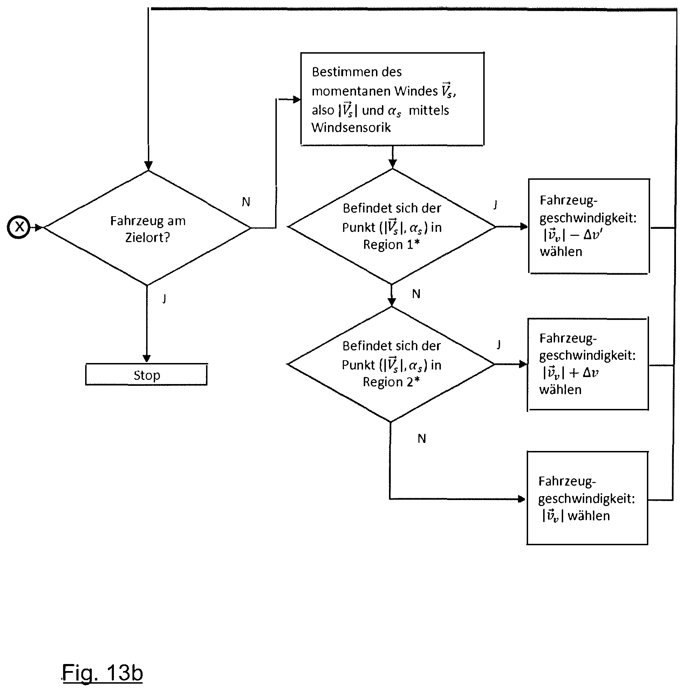

In den beiden Teilen der Figur 13, also der Figur 13a und der Figur 13b, ist ein Ablaufdiagramm zur Erläuterung des Verfahrens dargestellt. Der Ablauf beginnt in Figur 13A oben mit dem Start des Verfahrens. Eine Fahrtroute R und eine Reisegeschwindigkeit in Form der Durchschnittsgeschwindigkeit wird vom Fahrer des Fahrzeugs 16 gewählt. Die nachfolgende Entscheidungsraute legt fest, ob die Informationsverarbeitung im Fahrzeug 16 selbst oder im fahrzeugexternen Server 15 erfolgt. Im einen Fall wird die Routeninformation an das Rechenzentrum übertragen, im anderen Fall die ortsaufgelösten Flottendaten und die daraus erzeugte Windkarte in das Fahrzeug 16. Nachfolgend wird dann entweder im Fahrzeug 16 oder auf dem fahrzeugexternen Server die Wahrscheinlichkeitsverteilung P der Windverhältnisse bei der gewählten Fahrtroute R berechnet und die oben beschriebene Optimierungsaufgabe gelöst, also die Schwellwertfunktion SW bestimmt.

Der Verfahrensablauf springt dann auf den zweiten in Figur 13b gezeigten Teil weiter. Hier läuft nun die grundsätzliche Prüfung, ob das Fahrzeug 16 seinen Zielort, in den oben dargelegten Ausführungsbeispielen und Figuren der Zielort B, erreicht worden ist. Ist dies der Fall, wird das Verfahren gestoppt. Solange dies nicht der Fall ist werden die momentanen Windverhältnisse um das Fahrzeug 16 mit Hilfe seiner Windsensoren 12 bestimmt. Im Anschluss wird überprüft ob sich der erfasste Messwert in der Region 1* oder der Region 2* befindet. Im ersten Fall wird die Fahrzeug-geschwindigkeit $|\mathbf{v}_v|$ um $\Delta v'$ reduziert, im Falle der Lage in der Region 2* wird die Fahrgeschwindigkeit $|\mathbf{v}_v|$ entsprechend um $\Delta v$ erhöht. Liegen die aktuellen Messwerte weder in der Region 1* noch in der Region 2*, also zwischen diesen Regionen und insbesondere im Bereich der Schwellwertfunktion SW, dann wird die Fahrgeschwindigkeit $|\mathbf{v}_v|$ bei der durchschnittlichen Fahrgeschwindigkeit $|\mathbf{v}_v|$ belassen oder wenn sie zuvor geändert worden ist auf diese zurückgesetzt. Dieser Ablauf wird solange wiederholt, bis das Fahrzeug 16 den Zielort B erreicht hat.

Ein erstes theoretisches Ausführungsbeispiel verdeutlicht das Prinzip des Verfahrens. Ein Fahrzeug 16 befährt einen Strecke s mit konstanter Windgeschwindigkeit $v_s$ aus zwei verschiedenen Richtungen $\alpha_s = 0°$ (frontaler Gegenwind) und $\alpha_s = 45°$ (Gegenwind von vorne rechts). Die verschiedenen Windrichtungen seien gleichverteilt, d.h. die Wahr-scheinlichkeit von $\alpha_s = 0°$ ist gleich der Wahrscheinlichkeit $\alpha_s = 45°$, über die Gesamtstrecke s. Beispielsweise sei auf der ersten Teilstrecke s/2 der Winkel $\alpha_s = 0°$ und auf der zweiten Teilstrecke $\alpha_s = 45°$. Fährt das Fahrzeug 16 nun auf der ersten Teilstrecke eine um $\Delta v'$ reduzierte und auf der zweiten Teilstrecke um $\Delta v$ erhöhte Geschwindigkeit, so ist die gesamte Energie $W = W1 + W2 = F1*s/2 + F2*s/2$ mit $F1 = \gamma*(|v_v| - \Delta v' + v_s)^2$ und $F2 = \gamma*(v_{rel})^2$, wobei $v_{rel}^2$ eine Funktion von $|v_v| + \Delta v$ und $\alpha_s = 45°$ gegeben ist durch

$$(|v_v| + \Delta v)^2 + v_s^2 + 2(|v_v| + \Delta v)v_s/\sqrt{2},$$

und $\gamma$ alle konstanten bzw. als konstant angenommenen Faktoren (d.h. Luftdichte, Widerstandsbeiwert, Fläche) enthält.

Ein einem praktischen Ausführungsbeispiel sei das Verfahren wie folgt beschreiben. Ein Fahrzeug wählt eine Route entlang California State Route 1 (kurz CA 1 oder Highway 1) von Manchester State Park nach San Francisco. Die streckenbezogene Windwahrscheinlichkeitsdichte ergibt hohe Wahrscheinlichkeiten für ständigen Gegenwind aus unterschiedlichen Richtungen mit unterschiedlichen Beträgen. Das heißt, dass die streckenbezogene Windwahrscheinlichkeitsdichte hohe Wahrscheinlichkeitswerte in einem kleinem Winkelbereich $\alpha_s$ beispielsweise zwischen 0° (frontaler Gegenwind) bis seitlichen Wind von 45° hat. Auch sei die Geschwindigkeitsverteilung beispielsweise normalverteilt um 30km/h mit einer Varianz von 10km/h. Auf Basis der streckenbezogenen Windwahrscheinlichkeitsdichte werden nun zwei Bereichen 1* und 2* gefunden, für welche die Differenz zwischen der durch Geschwindigkeitsreduktion zu erwartenden Gesamtkraft F+ und der durch Geschwindigkeitserhöhung zu erwartenden Gesamtkraft F- maximal ist. Fährt nun das Fahrzeug 16 so messen seine Windsensoren 12 die gegenwärtige/momentane Windgeschwindigkeit und -richtung. Befinden sich dieses Wertepaar im Bereich 1*, so wird die Fahrzeuggeschwindigkeit um $\Delta v'$ reduziert. So fährt das Fahrzeug langsamer, wenn der Winkel des Windes klein und die Geschwindigkeit groß ist. Befinden sich dieses Wertepaar allerdings im Bereich 2*, so wird die Fahrzeuggeschwindigkeit um $\Delta v$ erhöht. So fährt das Fahrzeug 16 schneller, wenn der Winkel des Windes relativ groß ist (aber immer noch der Wind von vorne kommt) und die Windgeschwindigkeit klein ist. In dieser Situation wird weniger Nettokraft benötig da der Gewinn, d.h. die Differenz zwischen F+ und F- positiv ist und die Durchschnittsgeschwindigkeit weiterhin konstant $v_v$ ist.

## Patentansprüche

1. Verfahren zur energieoptimierten Vorgabe einer aktuellen Fahrzeuggeschwindigkeit bei einer ausgewählten ge-wünschten Durchschnittsgeschwindigkeit ($|\mathbf{v}_v|$) einer geplanten Fahrtroute unter Berücksichtigung einer Windverteilung (P) entlang der Fahrtroute, wobei die Windverteilung (P) durch einen fahrzeugexternen Server (15) in Form von Windwerten für mehrere aufeinanderfolgende Positionen entlang der oder in der örtlichen Region der geplanten Fahrtroute bereitgestellt wird, wobei örtliche Windwerte auf Messwerten basieren, die durch eine Vielzahl von Fahrzeugen einer Fahrzeugflotte (11) mittels Windsensoren (12) erfasst und mit dem fahrzeugexternen Server (15) geteilt werden,

**dadurch gekennzeichnet, dass**

für jeden Ort ($O_i$) mit wenigstens einem verfügbaren Messwert eine ortabhängige Windwahrscheinlichkeitsdichtefunktion ($P_O$) in Abhängigkeit des Windgeschwindigkeitsbetrags ($|v_s|$) und der Windrichtung ($\alpha_s$) erstellt wird, wobei anhand der geplanten Fahrtroute mittels der ortabhängigen Windwahrscheinlichkeitsdichte ($P_O$) eine Wahrscheinlichkeitsverteilung ($P$) der Windverhältnisse auf der Fahrtroute berechnet wird, wobei auf der Basis der Windwahrscheinlichkeitsverteilung ($P$) entlang der Fahrtroute mittels Optimierungsverfahren eine Schwellwertfunktion ($SW$) definiert wird, die die Fläche des Betrags der Windgeschwindigkeiten ($|v_s|$) über der Windrichtung ($\alpha_s$) in der Art in zwei Bereiche (1,2) aufteilt, dass in dem einen Bereich (2) die Fahrzeuggeschwindigkeit erhöht werden kann ohne mehr Nettokraft aufzubringen und in dem anderen Bereich (1) die Fahrzeuggeschwindigkeit verringert werden muss, um nicht mehr Nettokraft aufbringen zu müssen, und wobei ein vom Fahrzeug (16) erfasster aktueller Messwert genutzt wird um aktuelle Windwerte zu bestimmen, wonach die Lage des aktuellen Windwerts in dem einen oder dem anderen Bereich (1,2) oder auf der Schwellwertfunktion ($SW$) bestimmt wird, wobei bei einer Lage in dem einen Bereich (2) die Geschwindigkeit erhöht, bei einer Lage in dem anderen Bereich (1) die Geschwindigkeit reduziert und bei einer Lage auf der Schwellwertfunktion die Geschwindigkeit konstant belassen wird.

2. Verfahren nach Anspruch 1,
**dadurch gekennzeichnet, dass**
die Messwerte Windgeschwindigkeitsbeträge ($|v_s|$) und Windrichtungen ($\alpha_s$) umfassen.

3. Verfahren nach Anspruch 1 oder 2,
**dadurch gekennzeichnet, dass**
die Windwerte von dem fahrzeugexternen Server (15) durch zeitlich und/oder örtlich gemittelte Messwerte aggregiert werden.

4. Verfahren nach einem der Ansprüche 1 bis 3,
**dadurch gekennzeichnet, dass**
die Messwerte entsprechend der Zeitspanne zwischen der Verwendung der Messwerte und der Erfassung der Messwerte mittels eines Gewichtungsfaktors gewichtet werden, welcher mit zunehmender Zeitspanne kleiner wird.

5. Verfahren nach einem der Ansprüche 2 bis 4,
**dadurch gekennzeichnet, dass**
bei der Aggregation weitere Parameter verwendet werden, welche zum Zeitpunkt der Erfassung des Messwerts am Ort (O) der Erfassung des Messwerts ermittelt werden, und welche insbesondere die Verkehrslage abbilden.

6. Verfahren nach einem der Ansprüche 1 bis 5,
**dadurch gekennzeichnet, dass**
die Werte der Windverteilung bei sich ändernden Messwerten von den Fahrzeugen der Fahrzeugflotte (11) aktualisiert werden.

7. Verfahren nach einem der Ansprüche 1 bis 6,,
**dadurch gekennzeichnet, dass**
bei der Bestimmung der Schwellwertfunktion ($SW$) zusätzlich die Abhängigkeit des Luftwiderstandsbeiwerts ($c_w$) von den Windwerten berücksichtigt wird.

**Claims**

1. Method for energy-optimized specification of a current vehicle speed for a selected desired average speed ($|\mathbf{v}_v|$) of a planned route, taking into account a wind distribution ($P$) along the route, wherein the wind distribution ($P$) is provided by a server (15), which is outside of the vehicle, in the form of wind values for several consecutive positions along or in the local region of the planned route, wherein local wind values are based on measured values which are recorded by a plurality of vehicles of a vehicle fleet (11) by means of wind sensors (12) and shared with the server (15) outside of the vehicle,
**characterized in that,**
for each location (Oi) which has at least one available measured value, a location-dependent wind probability density function (Po) is created depending on the wind speed value ($|v_s|$) and the wind direction ($\alpha_s$), wherein, on the basis of the planned route, a wind probability distribution ($P$) of the wind conditions on the route is calculated by the means of the location-dependent wind probability density (Po), wherein, on the basis of the wind probability distribution ($P$)

along the route, a threshold function (SW) is defined by means of optimization methods, which threshold function divides the area of the magnitude of the wind speeds ($|v_s|$) over the wind direction ($\alpha_s$) into two regions (1,2), such that, in one region (2), the vehicle speed can be increased without applying more net force and, in the other region (1), the vehicle speed must be reduced in order not to have to apply more net force, and wherein a current measured value recorded by the vehicle (16) is used to determine current wind values, after which the position of the current wind value in one or the other region (1,2) or on the threshold function (SW) is determined, wherein, when in a position in one region (2) the speed is increased, when in a position in the other region (1) the speed is reduced, and when in a position on the threshold value function the speed is kept constant.

2. Method according to claim 1,
**characterized in that**
the measured values comprise wind speed values ($|v_s|$) and wind directions ($\alpha_s$).

3. Method according to claim 1 or claim 2,
**characterized in that**
the wind values are aggregated by the server (15) outside of the vehicle using temporally and/or spatially averaged measured values.

4. Method according to any of claims 1 to 3,
**characterized in that**
the measured values are weighted according to the time period between the use of the measured values and the recording of the measured values by means of a weighting factor which becomes smaller as the time period increases.

5. Method according to any of claims 2 to 4,
**characterized in that,**
during aggregation, additional parameters are used which are determined at the time at which the measured value is recorded at the location (O) where the measured value is recorded and which, in particular, map the traffic situation.

6. Method according to any of claims 1 to 5,
**characterized in that**
the wind distribution values are updated by the vehicles of the vehicle fleet (11) when measured values change.

7. Method according to any of claims 1 to 6,
**characterized in that,**
when determining the threshold function (SW), the dependence of the drag coefficient ($c_w$) on the wind values is also taken into account.

**Revendications**

1. Procédé pour la prescription optimisée en énergie d'une vitesse de véhicule actuelle pour une vitesse moyenne souhaitée sélectionnée ($|\mathbf{v}_v|$) d'un itinéraire de déplacement planifié en tenant compte d'une répartition du vent (P) le long de l'itinéraire de déplacement, dans lequel la répartition du vent (P) est mise à disposition par un serveur (15) externe au véhicule sous la forme de valeurs de vent pour plusieurs positions successives le long ou dans la région locale de l'itinéraire de déplacement planifié, dans lequel les valeurs de vent locales sont basées sur des valeurs de mesure qui sont acquises par une pluralité de véhicules d'une flotte de véhicules (11) au moyen de capteurs de vent (12) et qui sont partagées avec le serveur (15) externe au véhicule,
**caractérisé en ce que**
pour chaque lieu (Oi) comportant au moins une valeur de mesure disponible, une fonction de densité de probabilité de vent (Po) dépendant du lieu est générée en fonction de la valeur de vitesse du vent ($|v_s|$) et de la direction du vent ($\alpha_s$), dans lequel une distribution de probabilité (P) des conditions de vent sur l'itinéraire de déplacement est calculée à l'aide de l'itinéraire de déplacement planifié au moyen de la densité de probabilité de vent (Po) dépendant du lieu, dans lequel une fonction de seuil (SW) est définie sur la base de la distribution de probabilité de vent (P) le long de l'itinéraire de déplacement au moyen d'un procédé d'optimisation, laquelle fonction de seuil divise la surface de la valeur des vitesses de vent ($|v_s|$) en fonction de la direction du vent ($\alpha_s$) de telle sorte qu'elle soit divisée en deux zones (1, 2), **en ce que**, dans une zone (2), la vitesse du véhicule peut être augmentée sans appliquer plus de force nette et, dans l'autre zone (1), la vitesse du véhicule doit être réduite pour ne pas devoir appliquer plus de force nette, et dans lequel une valeur de mesure actuelle acquise par le véhicule (16) est utilisée pour déterminer des valeurs de vent actuelles, après quoi la position de la valeur de vent actuelle est déterminée dans l'une ou l'autre des zones (1, 2) ou sur la fonction de seuil (SW), dans lequel la vitesse est augmentée en cas de position dans l'une des zones (2), la vitesse est réduite en cas de position dans l'autre zone (1) et la vitesse est laissée constante en cas de position sur la fonction de seuil.

2. Procédé selon la revendication 1,
   **caractérisé en ce que**
   les valeurs mesurées comprennent les valeurs de vitesse du vent ($|v_s|$) et les directions du vent ($\alpha_s$).

3. Procédé selon la revendication 1 ou 2,
   **caractérisé en ce que**
   les valeurs de vent provenant du serveur (15) externe au véhicule sont agrégées par des valeurs de mesure moyennées dans le temps et/ou dans l'espace.

4. Procédé selon l'une des revendications 1 à 3,
   **caractérisé en ce que**
   les valeurs de mesure sont pondérées en fonction de l'intervalle de temps entre l'utilisation des valeurs de mesure et l'acquisition des valeurs de mesure au moyen d'un facteur de pondération qui diminue avec l'augmentation de l'intervalle de temps.

5. Procédé selon l'une des revendications 2 à 4,
   **caractérisé en ce que**
   lors de l'agrégation, d'autres paramètres sont utilisés, qui sont déterminés au moment de l'acquisition de la valeur de mesure à l'endroit (O) de l'acquisition de la valeur de mesure, et qui représentent en particulier la situation du trafic.

6. Procédé selon l'une des revendications 1 à 5,
   **caractérisé en ce que**
   les valeurs de la répartition du vent sont mises à jour lorsque les valeurs mesurées par les véhicules de la flotte de véhicules (11) changent.

7. Procédé selon l'une des revendications 1 à 6,
   **caractérisé en ce que**
   lors de la détermination de la fonction de seuil (SW), la dépendance du coefficient de résistance à l'air ($c_w$) par rapport aux valeurs du vent est de plus prise en compte.

Fig. 1

Fig. 2

$$P_O(|\vec{v}_s|, \alpha_s)$$

Fig. 3

$P_{0,1}(|\vec{v}_s|, \alpha_s)$   $P_{0,2}(|\vec{v}_s|, \alpha_s)$

A   R   B

Fig. 4

Fig. 5

A   R   B

$|\vec{v}_s|$

SW

$P(|\vec{v}_s|, \alpha_s)$

40

$\alpha_s$

Fig. 6

Fig. 7

Fig. 8

Fig. 9

Fig. 10

Fig. 11

Fig. 12

**Start**

Eine Fahrzeugroute R und Reisegeschwindigkeit DV=$|\vec{v}_v|$ wird im vom Fahrer gewählt.

N — Lokale Informationsverarbeitung im Fahrzeug? — J

Senden der Routeninformationen R an das Rechenzentrum des OEMs.

Empfangen einer ortsaufgelösten aus Flottendaten erzeugte Windverteilungskarte vom Rechenzentrum des OEMs

Berechnen der Wahrscheinlichkeitsdichte der Windverhältnisse $P(|\vec{v}_s|, \alpha_s)$ bei gewählter Route R.

Lösen der Optimierungsaufgabe $\mathrm{argmax}_{1^*,2^*} (F_{gain} - F_{loss})$ mit $\int_{1^*} Pd|\vec{v}_s|d\alpha_s = \int_{2^*} Pd|\vec{v}_s|d\alpha_s$

$\times$

## Fig. 13a

Fig. 13b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20190283602 A1
- DE 102019004883 A1
- DE 102018221264 A1
- DE 102015000394 A1
- DE 102017218218 A1

### In der Beschreibung aufgeführte Nicht-Patentliteratur

- **JIA et al.** Energy-Optimal Adaptive Cruise Control for Electric Vehicles in Both Time and Space Domain based on Model Predictive Control. *IFAC-PapersOnLine*, 2019, vol. 52 (5), 13-20
- **GÖHRING E** ; **KRÄMER W.** Auswirkung aerodynamischer Maßnahmen auf Kraftstoffverbrauch und Fahrleistung moderner Nutzfahrzeuge - Teil 1-3. *ATZ Automobiltechnische Zeitschrift*, 1985